# EUROPÄISCHE PATENTSCHRIFT

(11) **EP 3 475 022 B1**
(45) Veröffentlichungstag und Bekanntmachung des Hinweises auf die Patenterteilung: **05.08.2020**
(21) Anmeldenummer: 16736019.7
(22) Anmeldetag: 24.06.2016
(51) Int. Cl.: B23K 15/00, B23K 26/14, B23K 26/21, B23K 26/70

(54) **BEARBEITUNGSEINHEIT ZUR BEARBEITUNG EINES WERKSTÜCKS UNTER VERWENDUNG EINES THERMISCHEN BEARBEITUNGSSTRAHLS, MIT EINER KOPPLUNGSEINRICHTUNG**
MACHINING UNIT FOR MACHINING A WORKPIECE USING A THERMAL MACHINING BEAM, HAVING A COUPLING DEVICE
UNITÉ D'USINAGE POUR USINER UNE PIÈCE AU MOYEN D'UN FAISCEAU D'USINAGE THERMIQUE, COMPRENANT UN DISPOSITIF D'ACCOUPLEMENT

(43) Veröffentlichungstag der Anmeldung: 01.05.2019
(73) Patentinhaber: Trumpf Werkzeugmaschinen GmbH + Co. KG, 71254 Ditzingen (DE)
(72) Erfinder: HAAG, Valentin, 78662 Bösingen (DE)
(74) Vertreter: Kohler Schmid Möbus Patentanwälte
(86) Internationale Anmeldenummer: PCT/EP2016/064672
(87) Internationale Veröffentlichungsnummer: WO 2017/220160

(56) Entgegenhaltungen:
- JP-A- H09 271 965
- JP-A- H10 225 787
- JP-A- H11 114 741

## Beschreibung

Die Erfindung betrifft eine Bearbeitungseinheit zur Bearbeitung eines Werkstücks, insbesondere zur Schweißbearbeitung eines Werkstücks, unter Verwendung eines thermischen Bearbeitungsstrahls, insbesondere eines Laserbearbeitungsstrahls, wobei der thermische Bearbeitungsstrahl mittels der Bearbeitungseinheit entlang einer Strahleinfallsachse auf ein Werkstück gerichtet werden kann, und wobei die Bearbeitungseinheit eine Drehantriebseinrichtung aufweist, mittels derer ein Zusatzmodul für die Werkstückbearbeitung um die Strahleinfallsachse drehbar ist.

### Stand der Technik

Bei der Bearbeitung eines Werkstückes mit Hilfe eines thermischen Bearbeitungsstrahls, z. B. beim Laserschweißen eines Werkstückes, ist es üblich, zusätzlich zu der Einrichtung, welche den Laserstrahl auf das Werkstück richtet und gegebenenfalls fokussiert, Zusatzmodule, wie beispielsweise eine seitlich angeordnete Schutzgas- oder Zusatzdrahtdüse, einzusetzen.

Aus der JP 10-62295 A ist beispielsweise eine Bearbeitungseinheit in Form eines Laserbearbeitungskopfes bekannt, welcher mit einer seitlich angeordneten Gasdüse zur Zufuhr von Arbeitsgas zur Bearbeitungsstelle versehen ist. Um Einschränkungen bei der Werkstückbearbeitung aufgrund eventueller Kollisionen der seitlich angeordneten Gasdüse mit dem Werkstück oder Werkstückhaltern zu reduzieren, ist die Gasdüse mittels einer Drehantriebseinrichtung um die Strahleinfallsachse des Laserbearbeitungskopfes drehbar. Ähnliche Bearbeitungseinheiten sind auch durch die JP 57-184595 A, und JP 09-271965 A (Basis für den Oberbegriff des Anspruchs 1) bekannt geworden.

### Aufgabe der Erfindung

Die Erfindung hat sich zur Aufgabe gesetzt, eine Bearbeitungseinheit bereitzustellen, welche sich bei einer kleinen Störkontur durch ein breites Einsatzspektrum auszeichnet.

### Beschreibung der Erfindung

Gelöst wird die Aufgabe durch eine Bearbeitungseinheit mit den Merkmalen von Anspruch 1.
Die erfindungsgemäße Bearbeitungseinheit dient insbesondere zur Schweißbearbeitung eines Werkstücks unter Verwendung eines thermischen Bearbeitungsstrahls. Besonders bevorzugt handelt es sich um eine Bearbeitungseinheit, welche die Werkstückbearbeitung mittels eines thermischen Bearbeitungsstrahls in Form eines Laserbearbeitungsstrahls durchführt.
Mittels der Bearbeitungseinheit kann der thermische Bearbeitungsstrahl entlang einer Strahleinfallsachse auf ein Werkstück gerichtet werden. Des Weiteren weist die Bearbeitungseinheit ein Zusatzmodul auf, welches vorzugsweise separat zu den Mitteln der Bearbeitungseinheit ausgebildet ist, mittels derer der Strahl auf das Werkstück gerichtet wird. Um eine flexible Werkstückbearbeitung zu ermöglichen, ist das Zusatzmodul mittels einer Drehantriebseinrichtung um die Strahleinfallsachse drehbar.

Die Erfindung zeichnet sich nun dadurch aus, dass die Bearbeitungseinheit eine Kopplungseinrichtung umfasst, um das Zusatzmodul wahlweise mit der Drehantriebseinrichtung zu koppeln oder in einer entkoppelten Stellung anzuordnen. Mittels der Kopplungseinrichtung ist das Zusatzmodul also zur Drehpositionierung um die Strahleinfallsachse an die Drehantriebseinrichtung koppelbar und in einer von der Drehantriebseinrichtung entkoppelten Stellung anordenbar.

Die entkoppelte Stellung kann vorzugsweise so gewählt werden, dass das Zusatzmodul in dieser Stellung relativ weit von der Bearbeitungsstelle der Bearbeitungseinheit entfernt ist. So kann das Zusatzmodul, wenn es für die aktuelle Werkstückbearbeitung nicht benötigt wird, aus demjenigen Bereich der Bearbeitungseinheit verbracht werden, welcher bezüglich Kollisionen mit dem Werkstück oder anderen Bauteilen besonders kritisch ist. Die effektive Störkontur der Bearbeitungseinheit ist deutlich reduziert im Vergleich zu einer Bearbeitungseinheit, bei welcher das Zusatzmodul nicht in einer entkoppelten Stellung anordenbar ist.

Ein weiterer Vorteil der Kopplungseinrichtung ergibt sich für den Fall, dass die Drehantriebseinrichtung zusätzlich zur Drehpositionierung eines weiteren Bearbeitungsmoduls dient, das nicht immer zusammen mit dem Zusatzmodul eingesetzt wird. So kann das Zusatzmodul, wenn es für eine Bearbeitungsaufgabe nicht benötigt wird, in der entkoppelten Stellung angeordnet werden. Es muss dann bei der Drehpositionierung des weiteren Bearbeitungsmoduls nicht mitgedreht werden.

Bei einem besonders bevorzugten Ausführungsbeispiel ist das Zusatzmodul als Zuführmodul ausbildet, mittels dessen ein Zusatzstoff bzw. Hilfsmedium zur Bearbeitungsstelle zuführbar ist, an welcher der thermische Bearbeitungsstrahl auf das Werkstück einwirkt. Ein solches Zuführmodul muss in der Regel in der mit der Drehantriebseinrichtung gekoppelten Stellung nahe der Bearbeitungsstelle der Bearbeitungseinheit angeordnet sein, um den Zusatzstoff bzw. das Hilfsmedium funktionssicher der Bearbeitungsstelle zuzuführen. Ein solches Zuführmodul stellt daher eine besonders relevante Störkontur in der unmittelbaren Umgebung der Bearbeitungsstelle dar. Andererseits ist der Einsatz des Zuführmoduls gegebenenfalls bei einigen Bearbeitungsaufgaben nicht erforderlich. In diesem Fall kann dank der erfindungsgemäßen Kopplungseinrichtung das Zusatzmodul aus dem Kollisionsbereich in eine entkoppelte Stellung überführt werden.
Ein in der Praxis besonders bedeutsames Beispiel für ein solches Zuführmodul weist eine Düsenanordnung für Schutz- bzw. Arbeitsgas auf. Nicht bei allen Werkstückbearbeitungen, insbesondere nicht bei allen Schweißbearbeitungen, ist es erforderlich, mit Hilfe eines Zusatzmoduls Schutz- oder Arbeitsgas der Bearbeitungsstelle zuzuführen, so dass die erfindungsgemäße Überführung des Zusatzmoduls in eine entkoppelte Stellung besonders vorteilhaft sein kann.
Ein weiteres Beispiel für ein Zusatzmodul, bei welchem die erfindungsgemäße Kopplungseinrichtung in der Praxis besonders vorteilhaft ist, ist ein Zuführmodul, das eine Zuführeinrichtung für einen Schweißzusatzstoff, insbesondere in Form eines Zusatzdrahtes, aufweist. Ein und dieselbe Schweißbearbeitungseinheit kann für eine Schweißbearbeitung mit und ohne Einsatz eines Zusatzstoffs verwendet werden, wobei während der Bearbeitung ohne Zusatzstoff die Störkontur der Bearbeitungseinheit in Nähe der Bearbeitungsstelle nicht unnötig durch das Zusatzmodul vergrößert ist, da es in die entkoppelte Stellung überführt werden kann.
Gerade bei Zuführmodulen für Zusatzstoffe ist es aufgrund gegebenenfalls vorhandener Anschlüsse und Förderschläuche besonders vorteilhaft, wenn das Zuführmodul nur dann durch die Drehantriebseinrichtung mitgedreht werden muss, wenn es auch wirklich benötigt wird.

Gemäß der Erfindung ist die Kopplungseinrichtung zumindest in der mit der Drehantriebseinrichtung gekoppelten Stellung des Zusatzmoduls von dem Zusatzmodul entkoppelbar. Die Kopplungseinrichtung muss folglich bei der Drehpositionierung des gekoppelten Zusatzmoduls nicht durch die Drehantriebseinrichtung mitgedreht werden. Dies hat Vorteile für die Dynamik der Drehpositionierung aber auch für die konstruktive Gestaltung der Kopplungseinrichtung, die folglich um die Stahleinfallsachse drehfest und damit konstruktiv einfacher ausgestaltet werden kann.

Um einen hohen Automatisierungsgrad zu erreichen, weist bei einem besonders bevorzugten Ausführungsbeispiel die Kopplungseinrichtung einen Antrieb auf, mittels dessen das Zusatzmodul zwischen der mit der Drehantriebseinrichtung gekoppelten Stellung und der entkoppelten Stellung bewegbar ist.

Im Falle eines bevorzugten Ausführungsbeispiels ist das Zusatzmodul mittels der Kopplungseinrichtung zwischen der mit der Drehantriebseinrichtung gekoppelten Stellung und der entkoppelten Stellung schwenkbar. Es ergeben sich Vorteile bei der konstruktiven Integration der Kopplungseinrichtung in die Bearbeitungseinheit. Besonders bevorzugt erfolgt die Schwenkbewegung um eine schräg, im Speziellen senkrecht, zur Strahleinfallsachse verlaufende Schwenkachse.

Eine besonders robuste und kompakte Variante der Erfindung ergibt sich, indem die Kopplungseinrichtung einen Beladearm, insbesondere einen schwenkbaren Beladearm, aufweist, welcher mit dem Zusatzmodul koppelbar ist.

Vorzugsweise weist die Bearbeitungseinheit ein zweites Zusatzmodul auf, welches mittels der Drehantriebseinrichtung um die Strahleinfallsachse drehbar ist. Die Drehantriebseinrichtung kann zugleich zur Drehpositionierung von zwei Zusatzmodulen mit vorzugsweise unterschiedlichen Aufgaben dienen.

Beispielsweise kann das erste Zusatzmodul zur Zuführung eines Zusatzstoffes, insbesondere eines Zusatzdrahtes, dienen. Bei dem zweiten Zusatzmodul kann es sich beispielsweise um ein Zuführmodul für Arbeits- bzw. Schutzgas handeln. Bei verschiedenen Bearbeitungsaufgaben, insbesondere Schweißbearbeitungen, ist der Einsatz eines Zuführmoduls für Arbeits- bzw. Schutzgas erforderlich, aber es wird kein Zusatzstoff (Zusatzdraht) benötigt. Das erste Zusatzmodul kann bei diesen Bearbeitungen mittels der Kopplungseinrichtung in die entkoppelte Stellung überführt werden.

Im Falle eines besonders bevorzugten Ausführungsbeispiels weist die Bearbeitungseinheit ein zweites Zusatzmodul auf, wobei das zweite Zusatzmodul mittels der ersten oder einer zweiten Kopplungseinrichtung an die Drehantriebseinrichtung zur Drehpositionierung um die Strahleinfallsachse koppelbar und in einer von der Drehantriebseinrichtung entkoppelten Stellung anordenbar ist.

Die Variante, bei welcher die erste Kopplungseinrichtung zugleich zur Kopplung und Entkopplung des ersten und des zweiten Zusatzmoduls dient, zeichnet sich durch eine vergleichsweise kompakte Bauform aus. Die Variante, bei welcher eine zweite Kopplungseinrichtung für das zweite Zusatzmodul vorgesehen ist, zeichnet sich dahingegen durch eine hohe Flexibilität aus.

Durch eine besonders hohe Anpassungsfähigkeit an die jeweilige Bearbeitungsaufgabe zeichnet sich auch ein bevorzugtes Ausführungsbeispiel aus, bei welchem wahlweise kein, nur das erste, nur das zweite oder beide Zusatzmodule zur Drehpositionierung um die Strahleinfallsachse an die Drehantriebseinrichtung koppelbar sind.

Um auch bei eventuellen Kollisionen der Bearbeitungseinheit die Gefahr von Beeinträchtigungen der Drehantriebseinrichtung zu reduzieren, weist die Drehantriebseinrichtung vorzugsweise eine Sicherheitskupplung auf.

Bei einem bevorzugten Ausführungsbeispiel ist die Drehantriebseinrichtung mit einer Drehposition-Referenziereinrichtung versehen. Durch die Maßnahme kann gewährleistet werden, dass die Drehantriebseinrichtung immer mit hoher Genauigkeit vorgegebene Drehpositionen einnehmen kann.

Eine besonders kompakte Bauform ergibt sich, wenn die Drehantriebseinrichtung eine Drehdurchführung für einen Zusatzstoff bzw. ein Hilfsmedium umfasst, welche von dem Zusatzmodul zur Bearbeitungsstelle zuführbar sind. Förderschläuche können zumindest teilweise entfallen. Außerdem kann die Drehdurchführung ermöglichen, dass das Zuführmodul endlos um die Strahleinfallsachse drehbar ist.

Generell sind bei einem besonders bevorzugten Ausführungsbeispiel das erste und/oder gegebenenfalls das zweite Zusatzmodul mittels der Drehantriebseinrichtung endlos um die Strahleinfallsachse drehbar.

Ebenfalls durch eine besonders kompakte Bauweise zeichnet sich ein besonders bevorzugtes Ausführungsbeispiel aus, bei welchem der Bearbeitungsstrahl durch die Drehantriebseinrichtung geführt ist.

Für eine Vielzahl von Bearbeitungsaufgaben, insbesondere Schweißbearbeitungen, ist es von Vorteil, wenn die die Bearbeitungseinheit eine Bearbeitungsdüse aufweist, durch welche der Bearbeitungsstrahl geführt ist, bevor er auf das Werkstück trifft. Die Bearbeitungsdüse dient beispielsweise zur (koaxialen) Zuführung von Schutz- oder Arbeitsgas zur Bearbeitungsstelle. Die Düsenhalterung der Bearbeitungsdüse kann alternativ oder zusätzlich auch eine sogenannte Crossjet-Einrichtung aufweisen.

Vorzugsweise ist die Bearbeitungsdüse von dem bzw. den Zusatzmodulen separat ausgebildet. In der Praxis von besonderer Bedeutung ist ein Zusatzmodul bzw. sind Zusatzmodule, die in ihrer mit der Drehantriebseinrichtung gekoppelten Stellung seitlich neben der Bearbeitungsdüse angeordnet sind.

Um den thermischen Bearbeitungsstrahl, insbesondere den Laserbearbeitungsstrahl, auf das Werkstück zu richten und zu fokussieren, weist die Bearbeitungseinheit im Falle eines besonders praxisrelevanten Ausführungsbeispiels eine Strahloptik auf. In der Regel ist es ausreichend und daher bevorzugt, wenn die Bearbeitungsdüse drehfest mit der Strahloptik verbunden ist.

Bei einem besonders bevorzugten Ausführungsbeispiel ist die Drehantriebseinrichtung kompakt in die Bearbeitungseinheit integriert, indem die Drehantriebseinrichtung zwischen der Strahloptik und der (gegebenenfalls drehfesten) Bearbeitungsdüse angeordnet ist.

Die Bearbeitungseinheit ist vorzugsweise dazu vorgesehen, an einer Bewegungsantriebseinrichtung befestigt zu werden. Mittels der Bewegungsantriebseinrichtung ist die Bearbeitungseinheit mitsamt der Strahloptik, dem Zusatzmodul und der Kopplungseinrichtung relativ zu dem Werkstück bewegbar. Die Bearbeitungseinheit ist insbesondere als ein Bearbeitungskopf ausgebildet. Die Bewegungsantriebseinrichtung bildet mitsamt der daran befestigten Bearbeitungseinheit eine Bearbeitungsvorrichtung. Als Bewegungsantriebseinrichtung ist beispielsweise ein Handhabungsroboter zu nennen, mittels dessen die Bearbeitungseinheit bzw. der Bearbeitungskopf relativ zu einem Werkstück bewegt werden kann.

Bei einem besonders bevorzugten Ausführungsbeispiel weisen das Zusatzmodul eine Düsenanordnung für Schutz- bzw. Arbeitsgas und die Bearbeitungsvorrichtung ein Düsenmagazin auf, aus welchem mittels der Kopplungseinrichtung Düsen für das Zusatzmodul ein- und auswechselbar sind. Es ergibt sich eine hochflexible Bearbeitungsvorrichtung, die automatisiert, an die jeweilige Bearbeitungsaufgabe angepasst werden kann.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert. Im Einzelnen zeigen:
- **Fig. 1**: eine Laserschweißbearbeitungsvorrichtung mit einem Laserschweißkopf an einem Handhabungsroboter,
- **Fign. 2 bis 4**: ein erstes Beispiel eines Laserschweißkopfs mit einem Zusatzmodul und einer Kopplungseinrichtung in drei verschiedenen Zuständen,
- **Fign. 5 und 6**: ein zweites Beispiel eines Laserschweißkopfs mit einem Zusatzmodul und einer Kopplungseinrichtung in zwei verschiedenen Zuständen,
- **Fign. 7 und 8**: ein drittes Beispiel eines Laserschweißkopfs mit einem Zusatzmodul und einer Kopplungseinrichtung in zwei verschiedenen Zuständen,
- **Fign. 9 und 10**: ein viertes Beispiel eines Laserschweißkopfs mit zwei Zusatzmodulen und einer Kopplungseinrichtung in zwei verschiedenen Zuständen,
- **Fig. 11**: eine perspektivische Ansicht von Teilen eines fünften Beispiels eines Laserschweißkopfs und
- **Fign. 12 bis 14**: einen Laserschweißkopf mit Beispielen für eine Drehposition-Referenzeinrichtung einer Drehantriebseinrichtung.

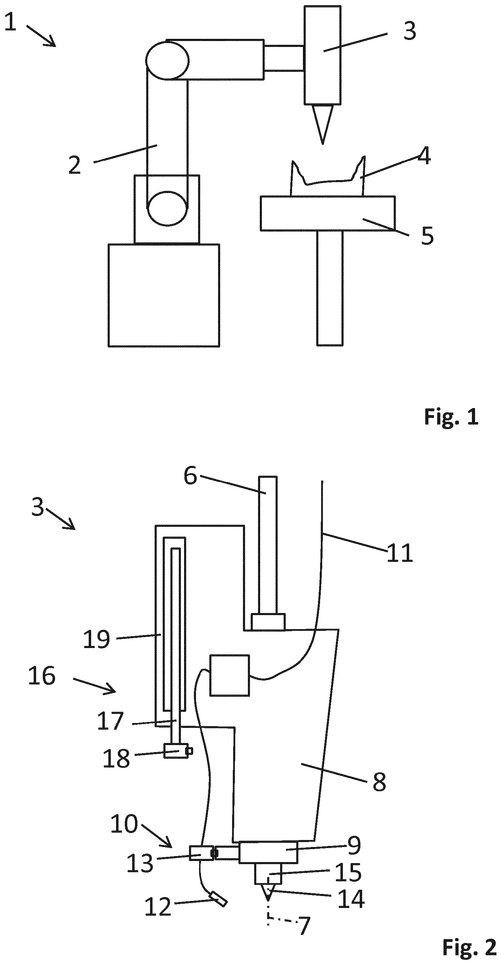

In Figur 1 ist beispielshaft eine Bearbeitungsvorrichtung **1** mit einer Bewegungsantriebseinrichtung in Form eines Handhabungsroboters **2** gezeigt. Die Bearbeitungsvorrichtung 1 ist als Laserschweißbearbeitungsvorrichtung ausgebildet. Am Arm des Handhabungsroboters 2 ist hierzu eine als Laserschweißkopf **3** ausgebildete Bearbeitungseinheit befestigt. Der Schweißkopf 3 ist mittels des Handhabungsroboters 2 relativ zu einem Werkstück **4**, das auf einem Werkstücktisch **5** angeordnet ist, zur Durchführung verschiedener Schweißaufgaben bewegbar.

Im Folgenden werden unter Bezugnahme auf die weiteren Figuren verschiedene Beispiele für eine Bearbeitungseinheit, insbesondere für einen Laserschweißkopf 3, beschrieben, wie sie beispielsweise in einer Bearbeitungsvorrichtung 1 gemäß Figur 1 eingesetzt werden kann.

In den Figuren 2 bis 4 ist ein erstes Beispiel eines Laserschweißkopfes 3 in drei verschiedenen Zuständen gezeigt. Mittels des Laserschweißkopfes 3 kann ein durch ein Laserkabel **6** dem Schweißkopf 3 zugeführter Laserbearbeitungsstrahl entlang einer Strahleinfallsachse **7** auf ein Werkstück 4 gerichtet werden. Um den Laserstrahl auf das Werkstück 4 zu richten und zu fokussieren, weist der Schweißkopf 3 eine Strahloptik **8** auf. Beispielsweise umfasst die Strahloptik 8 eine oder mehrere Laserlinsen oder -spiegel. In den Figuren ist die Strahloptik 8 nicht näher gezeigt.

Des Weiteren weist der Schweißkopf 3 eine Drehantriebseinrichtung **9** auf, mittels derer ein Zusatzmodul **10** für die Werkstückbearbeitung um die Strahleinfallsachse 7 drehbar ist, wobei der Bearbeitungsstrahl durch die Drehantriebseinrichtung 9 geführt ist.

In dem gezeigten Beispiel ist das Zusatzmodul 10 als Zuführeinrichtung ausbildet, mittels derer ein Zusatzstoff zur Bearbeitungsstelle, an welcher der thermische Bearbeitungsstrahl auf das Werkstück 4 einwirkt, zuführbar ist. Im Speziellen handelt es sich um eine Zuführeinrichtung für einen Schweißzusatzstoff, insbesondere in Form eines Zusatzdrahtes. Die Zuführeinrichtung weist einen Förderschlauch **11** für den Zusatzdraht auf, der in eine Drahtdüse **12** mündet. Die Drahtdüse 12 ist mittels einer lösbaren Kopplung **13** an die Drehantriebseinrichtung 9 koppelbar.

Alternativ kann das Zusatzmodul 10 auch als eine Düsenanordnung für Schutz- bzw. Arbeitsgas ausgebildet sein. Ein Beispiel eines Laserschweißkopfes 3 mit einem solchen Zusatzmodul als weiteres Zusatzmodul wird weiter unten beschrieben. Bei einem nicht gezeigten Beispiel eines Laserschweißkopfes 3 kann auch nur ein Zusatzmodul mit einer Düsenanordnung vorgesehen sein, das mittels einer Kopplungseinrichtung aktivier- und deaktivierbar ist.

Der Laserschweißkopf 3 gemäß den Figuren 2 bis 4 weist eine von dem Zusatzmodul 10 separate Bearbeitungsdüse **14** auf, durch welche der Bearbeitungsstrahl geführt ist, bevor es auf das Werkstück 4 trifft. Die Bearbeitungsdüse 14 kann zur koaxialen Zuführung von Schutz- oder Arbeitsgas dienen. Alternativ oder ergänzend kann eine Düsenhalterung **15** der Bearbeitungsdüse 14 mit einer Crossjet-Einrichtung versehen sein. Die Bearbeitungsdüse 14 ist über die Düsenhalterung 15 drehfest mit der Strahloptik 8 bzw. dem Gehäuse der Strahloptik 8 verbunden, wobei die Drehantriebseinrichtung 9 zwischen der Strahloptik 8 und der Bearbeitungsdüse 14 angeordnet ist.

Des Weiteren weist die Bearbeitungseinheit eine Kopplungseinrichtung **16** auf, mittels derer das Zusatzmodul 10 zwischen einer an die Drehantriebseinrichtung 9 gekoppelten und einer von der Drehantriebseinrichtung 9 entkoppelten Stellung bewegbar ist.

Die Kopplungseinrichtung 16 weist einen Beladearm **17** auf, der eine Kopplung **18** umfasst, mittels derer er mit dem Zusatzmodul 10 koppelbar ist. Außerdem weist die Kopplungseinrichtung 16 einen Linearantrieb **19** auf, mittels dessen das Zusatzmodul 10 zwischen der gekoppelten und der entkoppelten Stellung bewegbar ist. Beispielsweise kann der Linearantrieb 19 als elektrischer Spindelantrieb, hydraulischer oder pneumatischer Hubzylinder ausgebildet sein.

In Figur 2 ist das Zusatzmodul 10 in der Stellung gezeigt, in welcher es mit der Drehantriebseinrichtung 9 gekoppelt ist. Das Zusatzmodul 10 ist in dieser Stellung seitlich neben der Bearbeitungsdüse 14 angeordnet sind. Es stellt insofern eine relevante Störkontur bei der Werkstückbearbeitung dar. Die Kopplungseinrichtung 16 ist in Fig. 2 von dem Zusatzmodul 10 entkoppelt und befindet sich in einer zurückgezogenen Ruheposition.

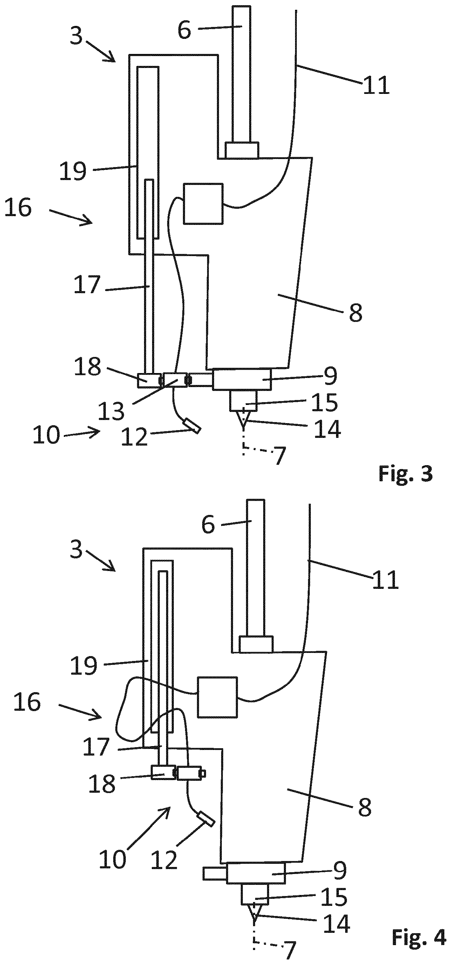

In Fig. 3 sind die Verhältnisse gezeigt, wenn das Zusatzmodul 10 gerade an die Drehantriebseinrichtung 9 angekoppelt wird oder von dieser entkoppelt wird. Der Beladearm 17 ist mittels des Linearantriebs 19 von der Ruheposition nach unten in eine Kopplungsposition verfahren. Beispielsweise ist am unteren Ende des Beladearms 17 ein nicht im Detail gezeigter Arretierungszylinder befestigt, der zur Entriegelung der beladearmseitigen Kopplung 18 und zur Verriegelung der drehantriebsseitigen Kopplung 13 oder umgekehrt dient.

In Fig. 4 ist das Zusatzmodul 10 in der entkoppelten Stellung gezeigt. Ausgehend von Fig. 3 ist der Beladearm 17 mit dem daran befestigten Zusatzmodul 10 nach oben in die zurückgezogene Ruheposition verfahren. Es kann in dieser Anordnung zwar nur eine Werkstückbearbeitung ohne Verwendung des Zusatzmoduls 10 erfolgen, dafür stellt das Zusatzmodul 10 aber keine Störkontur dar. Beispielsweise kann eine Schweißbearbeitung am Boden eines sehr engen Profils durchgeführt werden.

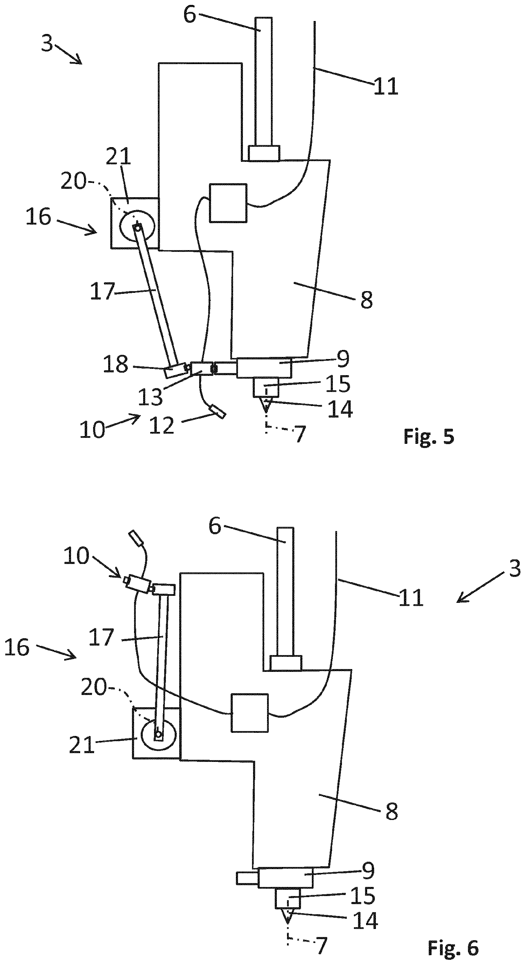

In den Figuren 5 bis 10 sind weitere Varianten eines Laserschweißkopfs 3 gezeigt, die in vielen Bauteilen mit der Variante der Figuren 2 bis 4 übereinstimmen. Für identische oder ähnliche Bauteile wurden daher dieselben Bezugszeichen verwendet und auf eine wiederholende Erläuterung ihrer Funktionen verzichtet.

Die Variante gemäß den Figuren 5 und 6 unterscheidet sich von der Variante gemäß den Figuren 2 und 4 im Wesentlichen dadurch, dass der Beladearm 17 der Kopplungseinrichtung 16 schwenkbar ist, um das Zusatzmodul 10 zwischen der gekoppelten und der entkoppelten Stellung zu überführen. Bei dem in den Figuren 5 und 6 gezeigten Beispiel verläuft die Schwenkachse **20** senkrecht zur Zeichenebene der Figuren sowie senkrecht zur Strahleinfallsachse 7.

In Figur 5 sind die Verhältnisse gezeigt, wenn das Zusatzmodul 10 mittels des Beladearms 17 gerade an die Drehantriebseinrichtung 9 gekoppelt wird. In Figur 6 sind hingegen die Verhältnisse dargestellt, wenn das Zusatzmodul 10 in der entkoppelten Stellung angeordnet ist. Zur Durchführung der Schwenkbewegung des Beladearms 17 ist z. B. ein elektrischer Drehantrieb **21** vorgesehen.

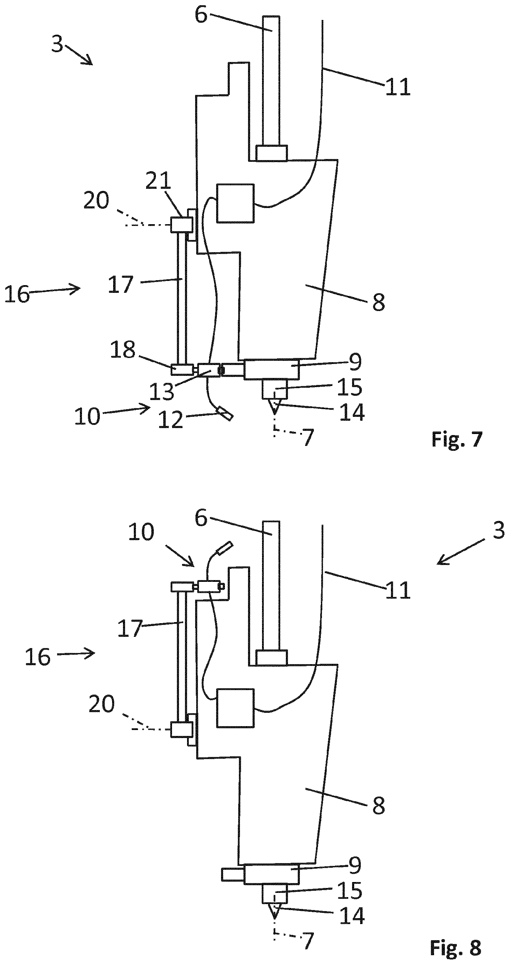

In den Figuren 7 und 8 ist ein weiteres Beispiel eines Laserschweißkopfs 3 gezeigt, bei welchem der Beladearm 17 der Kopplungseinrichtung 16 mittels eines Drehantriebes 21 schwenkbar um eine Schwenkachse 20 ist, die senkrecht zur Strahleinfallsachse 7 verläuft. Im Unterschied zu den Figuren 5 und 6 verläuft die Schwenkachse 20 aber in der Zeichenebene der Figuren 7 und 8.

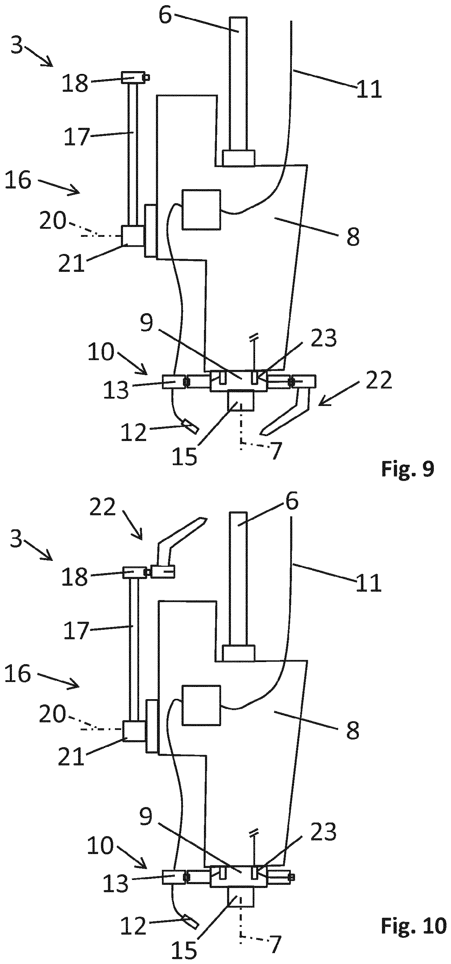

Auch in den Figuren 9 und 10 ist eine Variante eines Laserschweißkopfes 3 gezeigt, bei welcher der Beladearm 17 der Kopplungseinrichtung 16 mittels eines Drehantriebes 21 schwenkbar um eine Schwenkachse 20 ist, die senkrecht zur Strahleinfallsachse 7 und in der Zeichenebene der Figuren verläuft. Im Unterschied zu den bisher beschriebenen Varianten weist der Laserschweißkopf 3 ein zweites Zusatzmodul **22** auf, welches mittels der Drehantriebseinrichtung 9 um die Strahleinfallsachse 7 drehbar ist. Das zweite Zusatzmodul 22 weist eine Düsenanordnung für Schutz- bzw. Arbeitsgas auf. Zur Zuführung des Gases zur Düsenanordnung weist die Drehantriebseinrichtung 9 eine Drehdurchführung **23** auf. Dank dieser Drehdurchführung 23 ist das Zusatzmodul endlos mittels der Drehantriebseinrichtung 9 um die Strahleinfallsachse 7 drehbar. Dies trifft im gezeigten Beispiel nur zu, wenn das erste Zusatzmodul 10 nicht an die Drehantriebseinrichtung 9 gekoppelt ist. Da über das zweite Zusatzmodul 22 Schutz- bzw. Arbeitsgas der Bearbeitungsstelle zugeführt werden kann, kann die Bearbeitungsdüse 14 auch entfallen.

Die Kopplungseinrichtung 16 des Beispiels gemäß den Figuren 9 und 10 ist analog zur Kopplungseinrichtung 16 der Figuren 7 und 8 ausgebildet. Sie ist aber in der Lage sowohl das erste als auch das zweite Zusatzmodul 10, 22 zwischen einer an die Drehantriebseinrichtung 9 gekoppelten und einer von der Drehantriebseinrichtung 9 entkoppelten Stellung zu überführen.

In Figur 9 sind die Verhältnisse gezeigt, wenn beide Zusatzmodule 10, 22 an die Drehantriebseinrichtung 9 gekoppelt sind. In Figur 10 sind das erste Zusatzmodul 10 in der gekoppelten Stellung und das zweite Zusatzmodul 22 in der entkoppelten Stellung angeordnet. Es versteht sich, dass zum Überführen des Laserschweißkopfs 3 von dem Zustand gemäß Figur 9 in den Zustand gemäß Figur 10 zunächst die Drehantriebseinrichtung 9 das zweite Zusatzmodul 22 in eine Drehstellung drehen muss, in welcher das zweite Zusatzmodul 22 von dem Beladearm 17 gegriffen werden kann. Insbesondere muss hierzu eine 180° Drehung ausgeführt werden. Anschließend kann der Beladearm 17 das zweite Zusatzmodul 22 von der Drehantriebseinrichtung 9 entkoppeln.

Bei einer nicht gezeigten Variante des Laserschweißkopfes 3 ähnlich den Figuren 9 und 10 kann ein entkoppeltes Zusatzmodul 10, 22 beispielsweise an eine Zusatzmodul-Halterung übergeben werden. In diesem Fall wäre es möglich, dass beide Zusatzmodule 10, 22 gleichzeitig von der Drehantriebseinrichtung 9 entkoppelt sind. Bei einer solchen Variante ist es möglich, wahlweise kein, nur das erste, nur das zweite oder beide Zusatzmodule 10, 22 zur Drehpositionierung um die Strahleinfallsachse 7 an die Drehantriebseinrichtung 9 zu koppeln.

Bei einer weiteren Variante ist es denkbar, dass für das zweite Zusatzmodul 22 eine zweite Kopplungseinrichtung vorgesehen ist. Auch diese Variante zeichnet sich dadurch aus, dass wahlweise kein, nur das erste, nur das zweite oder beide Zusatzmodule 10, 22 zur Drehpositionierung um die Strahleinfallsachse 7 an die Drehantriebseinrichtung 9 koppelbar sind.

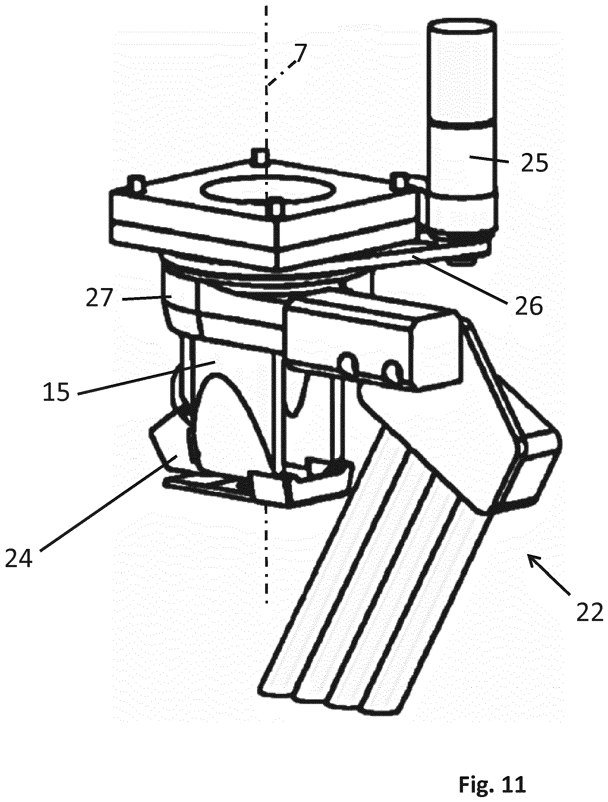

In Figur 11 ist beispielhaft ein Teil eines Laserschweißkopfes 3 analog zu der Variante gemäß den Figuren 9 und 10 gezeigt. Das zweite Zusatzmodul 22 weist eine Düsenanordnung mit mehreren Arbeits- bzw. Schutzgasdüsen auf, die seitlich zu einer Bearbeitungsdüse 14 befestigt sind. In Figur 11 ist die Düsenhalterung 15 gezeigt, welche eine Crossjet-Einrichtung **24** aufweist. Die Düsenhalterung 15 ist drehfest an einer nicht gezeigten Strahloptik 8 befestigt. Zwischen der Düsenhalterung 15 und der nicht gezeigten Strahloptik 8 ist die Drehantriebseinrichtung 9 angeordnet. Zur Erzeugung der Drehbewegung ist ein Elektromotor **25** vorgesehen, der mittels eines Keilriemens **26** die Drehbewegung auf ein Drehstellteil **27** überträgt. An dem Drehstellteil 27 ist die Schutzgas-Düsenanordnung des zweiten Zusatzmoduls 22 lösbar gekoppelt. In Figur 11 ist das erste Zusatzmodul 10 nicht an die Drehantriebseinrichtung 9 gekoppelt und daher nicht gezeigt. In dem Drehstellteil 27 ist eine in Figur 11 verdeckte Drehdurchführung für das Gas vorgesehen.

Vorzugsweise ist die Drehantriebseinrichtung 9 sämtlicher gezeigter Varianten mit einer Sicherheitskupplung versehen. Damit ist sichergestellt, dass auch bei einer Kollision der Zusatzmodule 10, 22 mit einem Werkstück 4 und Werkstückhaltern, der Laserschweißkopf 3 keinen Schaden nimmt.

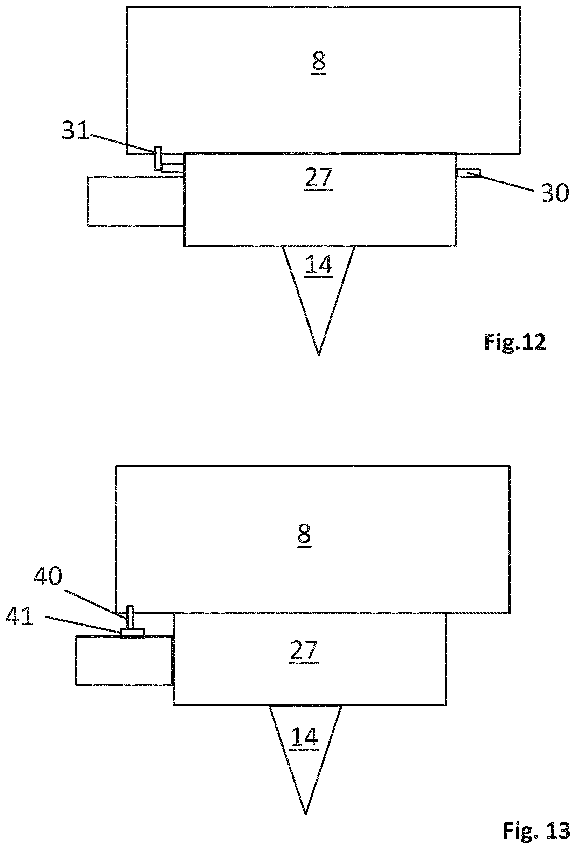

Anhand der Figuren 12 bis 14 werden Möglichkeiten erläutert, wie eine Drehposition-Referenziereinrichtung **28** der Drehantriebseinrichtung 9 prinzipiell gestaltet sein kann.

Bei der Variante gemäß Figur 12 ist ein Nockenprofil **30** auf dem Drehstellteil 27 vorgesehen, mit welchem ein Kippstößel **31** im Schleifkontakt steht. Je nach Drehstellung nimmt der Kippstößel 31 aufgrund des Nockenprofils 30 eine bestimmte Kippstellung ein, aus welcher die Drehstellung des Drehstellteils 27 berechnet werden kann.

In Figur 13 dient ein drehfest an einem Gehäuse der Strahloptik 8 befestigter Näherungssensor **40** dazu, festzustellen, ob eine Referenzmerkmal **41**, z.B. ein Messfähnchen, der Kopplung für ein Zusatzmodul 10, 22 direkt unter ihm angeordnet ist. Diese Drehstellung stellt eine vorgegebene Referenzdrehstellung der Drehantriebseinrichtung 9 dar. Die Referenzstellung kann z. B. vor jeder Bearbeitungsaufgabe, bei welcher ein Zusatzmodul verwendet wird, angefahren werden, dazu wird das Drehstellteil 27 solange gedreht, bis der Näherungssensor 40 die Anwesenheit des Referenzmerkmals 41 detektiert.

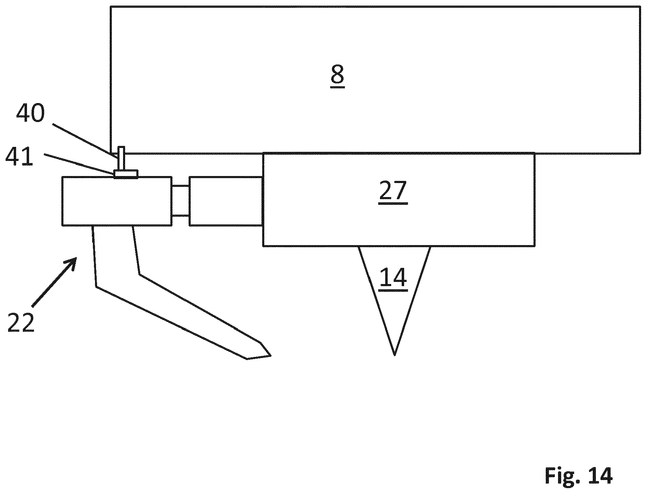

Figur 14 zeigt eine besonders bevorzugte Variante bei welcher das Referenzmerkmal 41 nicht auf der Kopplung am Drehstellteil 27, sondern auf einem Zusatzmodul 22 vorgesehen ist. Hierdurch kann das Referenzmerkmal nicht nur zur Referenzierung der Drehposition genutzt werden, sondern auch für eine Präsenzabfrage des Zusatzmoduls 22. Wird bei der Referenzierung nach einer kompletten Drehung (d.h. nach 360 Grad) des Drehstellteils 27 durch den Näherungssensor 40 keine Anwesenheit des Referenzmerkmals 41 detektiert, so wird die Abwesenheit des Zusatzmoduls 22 festgestellt. Eine Abwesenheit kann z.B. durch eine Kollision des Zusatzmoduls 22 mit einem Werkstück oder einer Spannvorrichtung entstehen, d.h. das Zusatzmodul 22 kann sich bei einer Kollision versehentlich von der Kopplung lösen.

Anhand der Figuren wurden lediglich einige bevorzugte Ausführungsbeispiele erläutert. Neben den bereits erwähnten sind viele weitere Abwandlungen vorstellbar. Beispielsweise kann bei einer Variante das Zusatzmodul eine kombinierte Düsenanordnung für einen Draht und Schutz- bzw. Arbeitsgas aufweisen, und ist die Bearbeitungsvorrichtung mit einem Düsenmagazin versehen. Mit Hilfe der Kopplungseinrichtung sind die im Magazin vorliegenden Düsenanordnungen einwechselbar.

Bevorzugt dient die Bearbeitungseinheit zur Laserschweißbearbeitung von Werkstücken. Die Bearbeitungseinheit kann aber auch beispielsweise als Plasmaschweißeinheit ausgebildet sein.

## Patentansprüche

1. Bearbeitungseinheit (3) zur Bearbeitung eines Werkstücks (4), insbesondere zur Schweißbearbeitung eines Werkstücks (4), unter Verwendung eines thermischen Bearbeitungsstrahls, insbesondere eines Laserbearbeitungsstrahls, wobei der thermische Bearbeitungsstrahl mittels der Bearbeitungseinheit (3) entlang einer Strahleinfallsachse (7) auf ein Werkstück (4) gerichtet werden kann, und wobei die Bearbeitungseinheit (3) eine Drehantriebseinrichtung (9) und zumindest ein Zusatzmodul (10, 22) aufweist, mittels derer das mindestens eine Zusatzmodul (10, 22) für die Werkstückbearbeitung um die
Strahleinfallsachse (7) drehbar ist, **dadurch gekennzeichnet, dass** die Bearbeitungseinheit (3) eine Kopplungseinrichtung (16) umfasst, mittels derer das mindestens eine Zusatzmodul (10, 22) zwischen einer an die Drehantriebseinrichtung (9) gekoppelten und einer von der Drehantriebseinrichtung (9) entkoppelten Stellung bewegbar ist, und dass die Kopplungseinrichtung (16) zumindest in der mit der Drehantriebseinrichtung (9) gekoppelten Stellung des mindestens einen Zusatzmoduls (10, 22) von dem mindestens einen Zusatzmodul (10, 22) entkoppelbar ist.

2. Bearbeitungseinheit (3) nach Anspruch 1, **dadurch gekennzeichnet, dass** das mindestens eine Zusatzmodul (10, 22) als Zuführeinrichtung (10, 22) ausbildet ist, mittels derer ein Zusatzstoff bzw. Hilfsmedium zur Bearbeitungsstelle, an welcher der thermische Bearbeitungsstrahl auf das Werkstück (4) einwirkt, zuführbar ist.

3. Bearbeitungseinheit (3) nach einem der vorigen Ansprüche, **dadurch gekennzeichnet, dass** das mindestens eine Zusatzmodul (22) eine Düsenanordnung für Schutz- bzw. Arbeitsgas aufweist.

4. Bearbeitungseinheit (3) nach einem der vorigen Ansprüche, **dadurch gekennzeichnet, dass** das mindestens eine Zusatzmodul (10) eine Zuführeinrichtung für einen Schweißzusatzstoff, insbesondere in Form eines Zusatzdrahtes, aufweist.

5. Bearbeitungseinheit (3) nach einem der vorigen Ansprüche, **dadurch gekennzeichnet, dass** die Kopplungseinrichtung (16) einen Beladearm (17), insbesondere einen schwenkbaren Beladearm (17), aufweist, welcher mit dem Zusatzmodul (10, 22) koppelbar ist.

6. Bearbeitungseinheit (3) nach einem der vorigen Ansprüche, **dadurch gekennzeichnet, dass** die Bearbeitungseinheit (3) zweite Zusatzmodule(10,22) aufweist, welche mittels der Drehantriebseinrichtung (9) um die Strahleinfallsachse (7) drehbar sind.

7. Bearbeitungseinheit (3) nach einem der vorigen Ansprüche, **dadurch gekennzeichnet, dass** die Bearbeitungseinheit (3) ein zweites Zusatzmodul (22) aufweist, wobei das zweite Zusatzmodul (22) mittels der ersten oder einer zweiten Kopplungseinrichtung (16) zwischen einer an die Drehantriebseinrichtung (9) gekoppelten und einer von der Drehantriebseinrichtung (9) entkoppelten Stellung bewegbar ist.

8. Bearbeitungseinheit (3) nach Anspruch 7, **dadurch gekennzeichnet, dass** wahlweise kein, nur das erste, nur das zweite oder beide Zusatzmodule (10, 22) zur Drehpositionierung um die Strahleinfallsachse (7) an die Drehantriebseinrichtung (9) koppelbar sind.

9. Bearbeitungseinheit (3) nach einem der vorigen Ansprüche, **dadurch gekennzeichnet, dass** die Drehantriebseinrichtung (9) an der Schnittstelle zu dem mindestens einen Zusatzmodul (10,22) eine Sicherheitskupplung aufweist.

10. Bearbeitungseinheit (3) nach einem der vorigen Ansprüche, **dadurch gekennzeichnet, dass** die Drehantriebseinrichtung (9) eine Drehdurchführung (23) für einen Zusatzstoff bzw. ein Hilfsmedium umfasst, welche von dem mindestens einen Zusatzmodul (10, 22) zur Bearbeitungsstelle zuführbar sind.

11. Bearbeitungseinheit (3) nach einem der vorigen Ansprüche, **dadurch gekennzeichnet, dass** das mindestens eine Zusatzmodul (10, 22) mittels der Drehantriebseinrichtung (9) endlos um die Strahleinfallsachse (7) drehbar ist.

12. Bearbeitungseinheit (3) nach einem der vorigen Ansprüche, **dadurch gekennzeichnet, dass** der Bearbeitungsstrahl durch die Drehantriebseinrichtung (9) geführt ist.

13. Bearbeitungseinheit (3) nach einem der vorigen Ansprüche, **dadurch gekennzeichnet, dass** die Bearbeitungseinheit (3) eine von dem bzw. den Zusatzmodulen (10, 22) separate Bearbeitungsdüse (14) aufweist, durch welche der Bearbeitungsstrahl geführt ist, bevor er auf das Werkstück (4) trifft.

14. Bearbeitungsvorrichtung (1) mit einer Bearbeitungseinheit (3) nach einem der vorigen Ansprüche, die eine Bewegungsantriebseinrichtung (2) aufweist, mittels derer die Bearbeitungseinheit (3) mitsamt der Strahloptik (8), dem Zusatzmodul (10, 22) und der Kopplungseinrichtung (16) relativ zu einem Werkstück (4) bewegbar ist, **dadurch gekennzeichnet, dass** die Bearbeitungsvorrichtung (1) ein Düsenmagazin aufweist, aus welchem mittels der Kopplungseinrichtung (16) Düsen für das Zusatzmodul (22) ein- und auswechselbar sind.

## Claims

1. A machining unit (3) for machining a workpiece (4), in particular for welding a workpiece (4), using a thermal machining beam, in particular a laser machining beam, wherein the thermal machining beam can be directed onto a workpiece (4) by means of the machining unit (3) along a beam incidence axis (7), and wherein the machining unit (3) comprises a rotary drive device (9) and at least one auxilliary module (10, 22) by means of which the at least one auxilliary module (10, 22) is rotatable about the beam incidence axis (7) for workpiece machining, **characterized in that** the machining unit (3) comprises a coupling device (16) by means of which the at least one auxilliary module (10, 22) is movable between a position coupled to the rotary drive device (9) and a position uncoupled from the rotary drive device (9), and the coupling device (16) at least in the position of the at least one auxilliary module (10, 22) coupled to the rotary drive device (9) is uncouplable from the at least one auxilliary module (10, 22).

2. The machining unit (3) as claimed in claim 1, **characterized in that** the at least one auxilliary module (10, 22) is configured as an infeed device (10, 22) by means of which an additive or an auxiliary medium, respectively, is feedable to the machining location where the thermal machining beam acts on the workpiece (4).

3. The machining unit (3) as claimed in one of the preceding claims, **characterized in that** the at least one auxilliary module (22) comprises a nozzle assembly for a shield or operating gas, respectively.

4. The machining unit (3) as claimed in one of the preceding claims, **characterized in that** the at least one auxilliary module (10) comprises an infeed device for a welding additive, in particular in the form of an auxilliary wire.

5. The machining unit (3) as claimed in one of the preceding claims, **characterized in that** the coupling device (16) comprises a loading arm (17), in particular a pivotable loading arm (17), which is couplable to the auxilliary module (10, 22).

6. The machining unit (3) as claimed in one of the preceding claims, **characterized in that** the machining unit (3) comprises second auxilliary modules (10, 22) which are rotatable about the beam incidence axis (7) by means of the rotary drive device (9).

7. The machining unit (3) as claimed in one of the preceding claims, **characterized in that** the machining unit (3) comprises a second auxilliary module (22), wherein the second auxilliary module (22) is movable by means of the first or a second coupling device (16) between a position coupled to the rotary drive device (9) and a position uncoupled from the rotary drive device (9).

8. The machining unit (3) as claimed in claim 7, **characterized in that** selectively no auxilliary module (10, 22), only the first, only the second, or both, auxilliary module/modules (10, 22) is/are couplable to the rotary drive device (9) for the rotational positioning about the beam incidence axis (7).

9. The machining unit (3) as claimed in one of the preceding claims, **characterized in that** the rotary drive device (9) comprises a safety coupling at the interface to the at least one auxilliary module (10, 22).

10. The machining unit (3) as claimed in one of the preceding claims, **characterized in that** the rotary drive device (9) comprises a rotary leadthrough (23) for an additive or an auxiliary medium, respectively, which are feedable from the at least one auxilliary module (10, 22) to the machining location.

11. The machining unit (3) as claimed in one of the preceding claims, **characterized in that** the at least one auxilliary module (10, 22) is endlessly rotatable about the beam incidence axis (7) by means of the rotary drive device (9).

12. The machining unit (3) as claimed in one of the preceding claims, **characterized in that** the machining beam is guided through the rotary drive device (9).

13. The machining unit (3) as claimed in one of the preceding claims, **characterized in that** the machining unit (3) comprises a machining nozzle (14) which is separate from the auxilliary module or modules (10, 22), respectively, and through which the machining beam is guided before the latter meets the workpiece (4).

14. A machining device (1) comprising a machining unit (3) as claimed in one of the preceding claims, said machining device (1) comprising a motion drive device (2) by means of which the machining unit (3) conjointly with the optical system (8), the auxilliary module (10, 22), and the coupling device (16), is movable relative to a workpiece (4), **characterized in that** the machining device (1) comprises a nozzle magazine from which nozzles for the auxilliary module (22) are interchangeable by means of the coupling device (16).

## Revendications

1. Unité d'usinage (3) conçue pour usiner une pièce (4), notamment pour usiner une pièce (4) par soudage avec utilisation d'un faisceau d'usinage thermique, en particulier d'un faisceau d'usinage au laser, sachant que ledit faisceau d'usinage thermique peut être dirigé vers une pièce (4) au moyen de l'unité d'usinage (3), le long d'un axe (7) d'incidence dudit faisceau, et sachant que ladite unité d'usinage (3) est pourvue d'au moins un module additionnel (10, 22) et d'un système (9) d'entraînement en rotation au moyen duquel ledit module additionnel (10, 22), à présence minimale, peut tourner autour dudit axe (7) d'incidence du faisceau en vue de l'usinage de ladite pièce, **caractérisée par le fait que** ladite unité d'usinage (3) inclut un système de couplage (16) au moyen duquel le module additionnel (10, 22), à présence minimale, peut être mû entre une position couplée au système (9) d'entraînement en rotation et une position dissociée d'avec ledit système (9) d'entraînement en rotation ; et **par le fait que** ledit système de couplage (16) peut être dissocié d'avec le module additionnel (10, 22), à présence minimale, au moins dans la position dans laquelle ledit module additionnel (10, 22) à présence minimale est couplé audit système (9) d'entraînement en rotation.

2. Unité d'usinage (3) selon la revendication 1, **caractérisée par le fait que** le module additionnel (10, 22), à présence minimale, est réalisé en tant que système d'amenée (10, 22) au moyen duquel un adjuvant, ou un fluide auxiliaire, peut être respectivement canalisé vers le point d'usinage auquel le faisceau d'usinage thermique agit sur la pièce (4).

3. Unité d'usinage (3) selon l'une des revendications précédentes, **caractérisée par le fait que** le module additionnel (22), à présence minimale, est muni d'un ensemble de buses destiné, respectivement, à du gaz de protection ou à du gaz de travail.

4. Unité d'usinage (3) selon l'une des revendications précédentes, **caractérisée par le fait que** le module additionnel (10), à présence minimale, est doté d'un système d'amenée dévolu à un adjuvant de soudage revêtant, en particulier, la forme d'un fil d'apport.

5. Unité d'usinage (3) selon l'une des revendications précédentes, **caractérisée par le fait que** le système de couplage (16) est pourvu d'un bras de chargement (17), en particulier d'un bras pivotant de chargement (17) pouvant être couplé au module additionnel (10, 22).

6. Unité d'usinage (3) selon l'une des revendications précédentes, **caractérisée par le fait que** ladite unité d'usinage (3) est munie de seconds modules additionnels (10, 22) aptes à tourner, au moyen du système (9) d'entraînement en rotation, autour de l'axe (7) d'incidence du faisceau.

7. Unité d'usinage (3) selon l'une des revendications précédentes, **caractérisée par le fait que** ladite unité d'usinage (3) comporte un second module additionnel (22), lequel second module additionnel (22) peut être mû, au moyen du premier ou d'un second système de couplage (16), entre une position couplée au système (9) d'entraînement en rotation et une position dissociée d'avec ledit système (9) d'entraînement en rotation.

8. Unité d'usinage (3) selon la revendication 7, **caractérisée par** la faculté de coupler sélectivement au système (9) d'entraînement en rotation, en vue du positionnement rotatoire autour de l'axe (7) d'incidence du faisceau, d'aucun module additionnel, uniquement du premier, uniquement du second, ou des deux modules additionnels (10, 22).

9. Unité d'usinage (3) selon l'une des revendications précédentes, **caractérisée par le fait que** le système (9) d'entraînement en rotation est doté d'un accouplement de sûreté au niveau de l'interface avec le module additionnel (10, 22) à présence minimale.

10. Unité d'usinage (3) selon l'une des revendications précédentes, **caractérisée par le fait que** le système (9) d'entraînement en rotation est muni d'une traversée rotative (23) dévolue à un adjuvant, respectivement à un fluide auxiliaire, qui peuvent être canalisés vers le point d'usinage par le module additionnel (10, 22) à présence minimale.

11. Unité d'usinage (3) selon l'une des revendications précédentes, **caractérisée par le fait que** le module additionnel (10, 22) à présence minimale peut accomplir, au moyen du système (9) d'entraînement en rotation, une rotation sans fin autour de l'axe (7) d'incidence du faisceau.

12. Unité d'usinage (3) selon l'une des revendications précédentes, **caractérisée par le fait que** le faisceau d'usinage est guidé par l'intermédiaire du système (9) d'entraînement en rotation.

13. Unité d'usinage (3) selon l'une des revendications précédentes, **caractérisée par le fait que** ladite unité d'usinage (3) est pourvue d'une buse d'usinage (14) respectivement distincte du ou des module(s) additionnel(s) (10, 22), par laquelle le faisceau d'usinage est guidé avant qu'il ne vienne rencontrer la pièce (4).

14. Dispositif d'usinage (1) équipé d'une unité d'usinage (3) conforme à l'une des revendications précédentes, comportant un système (2) d'entraînement en mouvement au moyen duquel ladite unité d'usinage (3) peut être mue, par rapport à une pièce (4), conjointement à l'optique (8) du faisceau, au module additionnel (10, 22) et au système de couplage (16), **caractérisé par le fait que** ledit dispositif d'usinage (1) est pourvu d'un magasin à buses à partir duquel des buses, affectées au module additionnel (22), peuvent être échangées et remplacées au moyen du système de couplage (16).
